# EUROPEAN PATENT APPLICATION

(11) **EP 4 718 280 A1**
(43) Date of publication of application: **01.04.2026**
(21) Application number: 24810413.5
(22) Date of filing: 22.05.2024
(51) Int. Cl.: G06F 16/48

(54) **MEDIA RESOURCE RENDERING METHOD AND APPARATUS, COMPUTER DEVICE, AND STORAGE MEDIUM**

(30) Priority: 22.05.2023 CN 202310582866
(71) Applicant: Beijing Zitiao Network Technology Co., Ltd., Beijing 100190 (CN)
(72) Inventor: WANG, Chengyi, Beijing 100028 (CN); WU, Ke, Beijing 100028 (CN); WANG, Zhaowei, Beijing 100028 (CN)
(74) Representative: Grünecker Patent- und Rechtsanwälte PartG mbB
(86) International application number: PCT/CN2024/094659
(87) International publication number: WO 2024/240174

(57) **Abstract**

The present disclosure provides a media resource rendering method and apparatus, a computer device, and a storage medium. The method comprises: acquiring a plurality of media rendering resources in a rendering template from a media editing interface; generating first media data on the basis of the plurality of media rendering resources, the fist media data comprising a first rendering resource set, and the first rendering resource set comprising at least some of the media rendering resources; playing back the first media data in the media editing interface; and in the process of playing back the first media data, adding a playback effect of a second rendering resource set in real time, the second rendering resource set comprising media rendering resources among the plurality of media rendering resources other than the first rendering resource set.

## Description

### CROSS-REFERENCE TO RELATED APPLICATIONS

The present application is based on and claims priority to Chinese Patent Application No. 202310582866.7, filed on May 22, 2023, the disclosure of which is incorporated herein by reference in its entirety.

### TECHNICAL FIELD

The present disclosure relates to the field of computer technology, and in particular, to a media resource rendering method and apparatus, a computer device, and a storage medium.

### BACKGROUND

When rendering audio and video data containing complex effects, a corresponding rendering template is typically configured. The rendering template includes effects, filters, stickers, transitions, music, animations, etc., and each effect corresponds to a respective resource package, which is stored in a remote server and needs to be downloaded before use.

### SUMMARY

Embodiments of the present disclosure provide a media resource rendering method and apparatus, a computer device, and a storage medium.

According to an aspect of the present disclosure, an embodiment of the present disclosure provides a media resource rendering method. The method includes: obtaining, in a media editing interface, a plurality of media rendering resources in a rendering template; generating first media data based on the plurality of media rendering resources, where the first media data includes a first set of rendering resources, and the first set of rendering resources includes at least a part of the media rendering resources; playing back the first media data in the media editing interface; and adding a playback effect of a second set of rendering resources in real time during playback of the first media data, the second set of rendering resources including other media rendering resources of the plurality of media rendering resources than the first set of rendering resources.

According to another aspect of the present disclosure, an embodiment of the present disclosure provides a media resource rendering apparatus. The apparatus includes: a resource obtaining module configured to obtain, in a media editing interface, a plurality of media rendering resources in a rendering template; a generation module configured to generate first media data based on the plurality of media rendering resources, where the first media data includes a first set of rendering resources, and the first set of rendering resources includes at least a part of the media rendering resources; a playback module configured to play back the first media data in the media editing interface; and an addition module configured to add a playback effect of a second set of rendering resources in real time during playback of the first media data, the second set of rendering resources including other media rendering resources of the plurality of media rendering resources than the first set of rendering resources.

According to another aspect of the present disclosure, an embodiment of the present disclosure provides a computer device. The computer device includes: a memory and a processor, the memory and the processor being communicatively connected to each other, where the memory stores computer instructions, and the processor executes the computer instructions to perform the media resource rendering method according to the first aspect or any implementation corresponding to the first aspect.

According to another aspect, an embodiment of the present disclosure provides a computer-readable storage medium, the computer-readable storage medium storing computer instructions that cause a computer to perform the media resource rendering method according to the first aspect or any implementation corresponding to the first aspect.

### BRIEF DESCRIPTION OF THE DRAWINGS

To more clearly describe the technical solutions in specific implementations of the present disclosure or in the prior art, the accompanying drawings for describing the specific implementations or the prior art will be briefly described below. Apparently, the accompanying drawings in the description below show some implementations of the present disclosure, and those of ordinary skill in the art may still derive other accompanying drawings from these accompanying drawings without creative efforts.
FIG. 1 is a schematic flowchart of a media resource rendering method according to some embodiments of the present disclosure;
FIG. 2 is a schematic flowchart of another media resource rendering method according to some embodiments of the present disclosure;
FIG. 3 is a schematic flowchart of still another media resource rendering method according to some embodiments of the present disclosure;
FIG. 4 is a schematic diagram of an experimental result of a media resource rendering method according to some embodiments of the present disclosure;
FIG. 5 is a block diagram of a structure of a media resource rendering apparatus according to an embodiment of the present disclosure; and
FIG. 6 is a schematic diagram of a hardware structure of a computer device according to an embodiment of the present disclosure.

### DETAILED DESCRIPTION

In order to make the objectives, technical solutions, and advantages of embodiments of the present disclosure clearer, the technical solutions in the embodiments of the present disclosure will be described clearly and completely below with reference to the accompanying drawings in the embodiments of the present disclosure. Apparently, the embodiments described are some rather than all of the embodiments of the present disclosure. All other embodiments obtained by those of ordinary skill in the art based on the embodiments of the present disclosure without any creative efforts shall fall within the scope of protection of the present disclosure.

When rendering audio and video data containing complex effects including effects, filters, stickers, transitions, music, animations, etc., a rendering template needs to include resource packages of the effects, filters, stickers, transitions, music, animations, etc., and these resource packages are typically stored in a remote server and need to be downloaded before use. Therefore, when rendering having complex effects and having resource packages of the effects located in the remote server, descriptions for the remote resource packages, such as http links, may be defined in the rendering template. All remote resources involved in the rendering template are traversed and sequentially downloaded according to a playback time order, and local file paths are updated into the rendering template after the download is complete. Media effects are re-rendered based on the rendering template to obtain audio and video effects.

Since there may be a lot of resources involved in the rendering template, in a case where the aforementioned solution is used, if a preview effect at a specific time point needs to be played back, the media effects can only be re-rendered after all resources corresponding to the time point are downloaded. This requires long loading time, and the worse the network, the longer the loading time, which seriously affects the user experience. In addition, it is difficult to avoid a resource download failure due to a poor network signal, preventing the restoration of the media effects of the rendering template.

In the present disclosure, it is recognized that when restoring the media effects corresponding to the rendering template, it is not necessary to render all the media effects simultaneously, and some media effects, such as some effects, stickers, filter effects, etc., can be progressively restored over the playback time. Therefore, for example, where there are many sticker resources in the rendering template, a video may be rendered first, and then stickers are downloaded while the video is being played back, with each downloaded sticker rendered immediately upon completion of download, which makes a user feel that the effects in the template are continuously and dynamically added during the playback, thereby significantly reducing the time of loading the rendering template without affecting the user experience of previewing the media effects.

Based on this, in this technical solution, the rendering resources are divided into essential rendering resources and non-essential rendering resources, where the essential rendering resources are prioritized for processing to present a corresponding media interface to the user, preventing the user from waiting for a long time, and the non-essential rendering resources can be downloaded and rendered on-the-fly based on requirements of playback time points, improving the user experience of previewing the media effects without affecting the presentation of the media effects.

According to an embodiment of the present disclosure, a media resource rendering method embodiment is provided. It should be noted that steps shown in a flowchart of the accompanying drawings may be performed, for example, in a computer system including a set of computer-executable instructions. Although a logical order is shown in the flowchart, the steps shown or described may be performed in an order different from that shown herein in some cases.

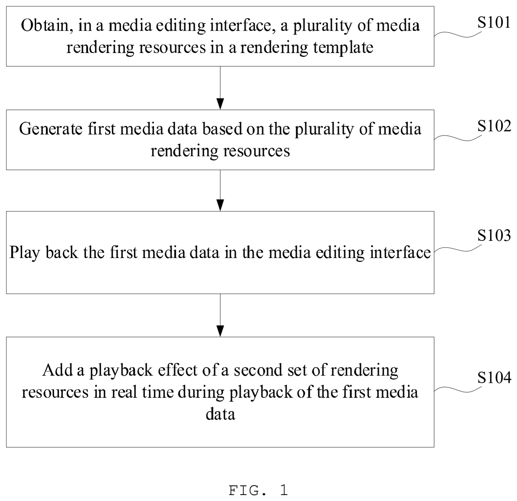

In this embodiment, there is provided a media resource rendering method that is usable in the aforementioned computer device, such as a mobile phone, a tablet computer, and a computer. FIG. 1 is a flowchart of a media resource rendering method according to an embodiment of the present disclosure. As shown in FIG. 1, the flow includes the following steps.

Step S101: a plurality of media rendering resources in a rendering template are obtained in a media editing interface.

The media editing interface is used to configure the rendering template accordingly. The rendering template is used to define descriptions for media rendering resources and to lay out the media rendering resources, so as to load media data according to the rendering template. The media rendering resources may be a resource package required for generating a media effect. Specifically, the media rendering resources may include a video resource package, an audio resource package, a sticker resource package, a filter resource package, an effect resource package, an animation resource package, a transition resource package, etc. The types of the media rendering resources are not limited here and those skilled in the art may make choice according to actual requirements.

Those skilled in the art may pre-configure the rendering template in the media editing interface and configure required media rendering resources in the rendering template. Accordingly, the media editing interface may obtain the plurality of media rendering resources contained in the rendering template by parsing configuration information of the rendering template.

Step S102: first media data is generated based on the plurality of media rendering resources.

The first media data includes a first set of rendering resources, and the first set of rendering resources includes at least a part of the media rendering resources.

The part of media rendering resources included in the first set of rendering resources are input into a rendering layer, and the rendering layer may render the part of media rendering resources according to a layout associated with the rendering template, to generate the corresponding first media data.

Step S103: the first media data is played back in the media editing interface.

The first media data is presented in the media editing interface, so that a user can preview the first media data associated with the first set of rendering resources.

Taking the first set of rendering resources including a video resource as an example, after the video resource in the rendering template is identified, the video source is downloaded, and the downloaded video resource is directly sent to the rendering layer for video rendering, so as to present video data corresponding to the video resource in the media editing interface, and play back the video data in the media editing interface, so that the user can watch a video playback image. It may be understood that the video resource contained in the first set of rendering resources may be distributed over any time point or time period of the video data, that is, determining of the first set of rendering resources may be independent of a playback time position and a playback time order of the rendering resources.

Step S104: a playback effect of a second set of rendering resources is added in real time during playback of the first media data. The second set of rendering resources includes other media rendering resources of the plurality of media rendering resources than the first set of rendering resources.

The second set of rendering resources is a set of media rendering resources required for accompanying the playback of the first media data. Specifically, the second set of rendering resources includes other media rendering resources of the plurality of media rendering resources than the first set of rendering resources. The other media rendering resources contained in the second set of rendering resources may be determined based on playback time points of the first media data.

Specifically, during playback of the first media data, the media rendering resources contained in the second set of rendering resources are sent to the rendering layer for rendering, to obtain a playback effect associated with the second set of rendering resources. Therefore, the playback effect corresponding to the second set of rendering resources can be added in real time based on playing back the first media data.

Taking the first set of rendering resources including a video resource and the second set of rendering resources including a sticker resource as an example, in response to rendering for the video resource being completed and a video playback image being presented, the sticker resource in the rendering template can be downloaded, and the sticker resource is rendered in the rendering layer to obtain sticker data. The sticker data is blended with the video data to dynamically add a sticker effect in the video playback image.

According to the media resource rendering method provided by this embodiment, the first media data is generated based on a part of the plurality of media rendering resources obtained in the media editing interface and played back, and the other media rendering resources are processed based on playing back the first media data, so as to add playback effects corresponding to the other media rendering resources in real time during the playback of the first media data. Therefore, there is no need to wait for completion of downloading all the media resources in the rendering template before rendering the media resources, but the media resources may be downloaded and rendered at any time, thereby reducing loading time of the media resources. Moreover, during rendering, a part of the media rendering resources can be prioritized for processing to present corresponding media data to the user, reducing waiting time of the user, and the other media rendering resources can be played back while being rendered, so that the corresponding playback effects can be dynamically added based on playing back the first media data, reducing impact on the presentation of the media effects, and improving the user experience of previewing the media effects.

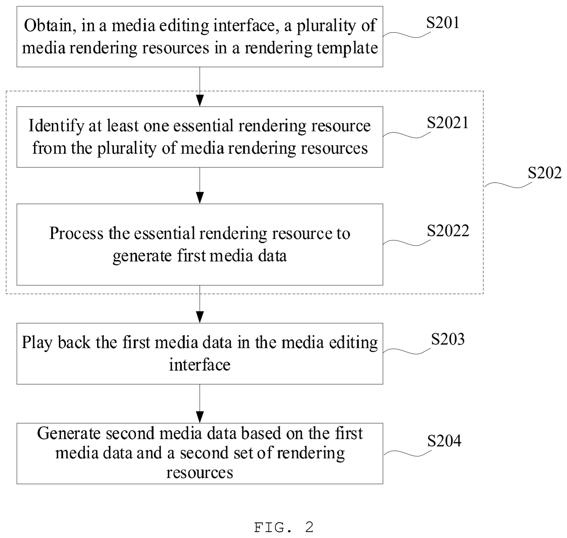

In this embodiment, there is provided a media resource rendering method that is usable in the aforementioned computer device, such as a mobile phone, a tablet computer, and a computer. FIG. 2 is a flowchart of a media resource rendering method according to an embodiment of the present disclosure. As shown in FIG. 2, the flow includes the following steps.

Step S201: a plurality of media rendering resources in a rendering template are obtained in a media editing interface. For detailed descriptions, refer to relevant descriptions corresponding to the aforementioned embodiment, which are not repeated here.

Step S202: first media data is generated based on the plurality of media rendering resources.

The first media data includes a first set of rendering resources, and the first set of rendering resources includes at least a part of the media rendering resources.

Specifically, the first set of rendering resources includes an essential rendering resource of the plurality of media rendering resources. Accordingly, step S202 may include the following steps.

Step S2021: at least one essential rendering resource is identified from the plurality of media rendering resources.

The essential rendering resource is a initial playback resource required for rendering the media effects, that is, a resource that is prioritized for playing back for the media effects. For example, if it is necessary to initially play back a video, the essential rendering resource is a video resource. If it is necessary to initially play back an audio, the essential rendering resource is an audio resource.

The plurality of media rendering resources include an essential rendering resource and a non-essential rendering resource. The essential rendering resource is identified from the plurality of media rendering resources according to a preset rule, and the preset rule is a rule preset for identifying the essential rendering resource.

In some implementations, step S2021 may include the following steps.

Step a1: whether each media rendering resource of the plurality of media rendering resources carries an essential identifier is identified.

The essential identifier is identifier information carried by the essential rendering resource. In response to the media rendering resources in the rendering template being obtained, the identifier information carried by each media rendering resource is detected to determine whether the identifier information carried by the media rendering resource is the essential identifier.

Step a2: one or more media rendering resources carrying the essential identifier of the plurality of media rendering resources are determined as essential rendering resources.

In response to determining that there is one media rendering resource carrying the essential identifier in the rendering template, the one media rendering resource is determined as the essential rendering resource, such as all video clips of a main track. In response to determining that there are a plurality of media rendering resources carrying the essential identifiers in the rendering template, the plurality of media rendering resources are determined as the essential rendering resources, such as only a first video clip of a main track, all clips of the main track, an audio track, or a sticker track. In addition, resources other than the essential rendering resources are determined as non-essential rendering resources.

Therefore, by identifying the essential identifiers carried by the media rendering resources, the essential rendering resources are quickly identified for prioritized loading, to ensure a loading speed of the essential rendering resources.

Step S2022: the at least one essential rendering resource is processed to generate first media data.

The first media data includes the at least one essential rendering resource.

The essential rendering resource is input into a rendering layer, and the rendering layer can render the essential rendering resource, to generate the first media data including the essential rendering resource. For example, the essential rendering resource is a video resource, and then the rendering layer renders the essential rendering resource to generate a video image corresponding to the essential rendering resource. The user can then preview the first media data associated with the essential rendering resource through the video image. It may be understood that the essential rendering resource may be distributed over any time point or time period of the video data, that is, determining of the essential rendering resource may be independent of a playback time position and a playback time order of the rendering resource.

Step S203: the first media data is played back in the media editing interface. For detailed descriptions, refer to relevant descriptions corresponding to the aforementioned embodiment, which are not repeated here.

Step S204: a playback effect of a second set of rendering resources is added in real time during playback of the first media data. The second set of rendering resources includes other media rendering resources of the plurality of media rendering resources than the first set of rendering resources. For detailed descriptions, refer to relevant descriptions corresponding to the aforementioned embodiment, which are not repeated here.

In some embodiments, the aforementioned step 104 or S204 may include the following step: second media data is generated based on the first media data and the second set of rendering resources.

In some embodiments, the second media data includes the first media data and at least a part of media rendering resources in the second set of rendering resources added in real time.

Based on playing back the first media data, the media rendering resources in the second set of rendering resources are input into the rendering layer for rendering, so as to blend the first media data with the media data obtained by rendering the second set of rendering resources, to generate the second media data. Therefore, when presenting the second media data, the user can preview the first media data and playback effects of other media rendering resources added into the first media data in real time.

In some implementations, the second set of rendering resources includes non-essential rendering resources of the plurality of media rendering resources. Accordingly, the step of generating second media data based on the first media data and the second set of rendering resources may include the following step.

Step B: one or more non-essential rendering resources are processed within a preset duration after processing the essential rendering resource, to obtain a processing result, and second media data including the non-essential rendering resources is generated and played back based on the processing result and the first media data.

The preset duration is a preset interval duration after rendering the essential rendering resource, that is, the non-essential rendering resources in the second set of rendering resources are rendered after rendering of the essential rendering resource is completed. Specifically, the non-essential rendering resources are downloaded, and the downloaded non-essential rendering resources are sent to the rendering layer for rendering, to obtain media data including the non-essential rendering resources. Then, the media data corresponding to the second set of rendering resources is blended with the first media data, and the second media data is played back based on playing back the first media data.

In this implementation, by dividing the media resources into essential rendering resources and non-essential rendering resources, in rendering, the essential rendering resources are prioritized for rendering to generate corresponding first media data to be played back in the media editing interface, then the non-essential rendering resources are processed to generate corresponding second media data, and the second media data is played back based on the first media data. Therefore, in rendering the media resources, the essential rendering resources can be prioritized for processing to present the corresponding media editing interface to the user, reducing waiting time of the user, and the non-essential rendering resources can be played back while being rendered, so that the media data corresponding to the second set of rendering resources can be added in real time based on playing back the first media data, reducing impact on the presentation of the media effects, and improving the user experience of previewing the media effects.

In some implementations, the aforementioned step B may include the following steps.

Step b1: a playback position of the first media data corresponding to a time when the first media data has been played back for a preset duration is determined.

The preset duration is a preset playback duration of the first media data, and the playback position is a position reached after the first media data has been played back for the preset duration. Specifically, the first media data is played back according to a corresponding playback track, where the playback track sets a playback time for the media data according to a time dimension, that is, there is a one-to-one correspondence between the playback time and the media data. A position of the first media data on the playback track can be determined based on the preset duration of the first media data, and the position is the playback position of the first media data.

Taking the first media data being video data as an example, playback of the video data is performed according to a video track. Each frame of video correspondingly has a start time and an end time. After the video data has been played back for a preset duration, a playback position where the video data is currently located can be determined in combination with the preset duration, and the start time and the end time of each frame of video.

Step b2: a target resource required for a next playback position is determined from the non-essential rendering resources based on the playback position.

Based on playing back the first media data, each non-essential rendering resource may be downloaded and loaded into the current first media data according to a preset start time and end time. In order to ensure loading continuity, and present a dynamic adding effect, during playback of the first media data, it can be detected in real time whether a non-essential rendering resource needs to be loaded for the next playback position of the first media data .

A non-essential rendering resource required to be loaded for the next playback position is downloaded as a target resource. Even in a case of a poor network, the non-essential rendering resource can be downloaded according to a playback requirement in this manner, without waiting for download of all non-essential rendering resources, and therefore, waiting time for resource loading can be reduced and a media playback effect can be ensured.

In some optional implementations, the aforementioned step b2 may include the following steps.

Step b21: loading time corresponding to each non-essential rendering resource is obtained, and based on the loading time, a target playback position of each non-essential rendering resource based on the first media data is determined.

Step b22: the target playback position is compared with the next playback position, and target resources required for the next playback position are filtered for from the non-essential rendering resources based on the comparison.

The loading time represents presentation time of each non-essential rendering resource. The loading time is pre-configured according to actual requirements. The loading time is not specifically limited here, and those skilled in the art can set the loading time of each non-essential rendering resource on the first media data according to debugging results or empirical values.

A playback position of each playback moment of the first media data on the playback track is determined according to the playback time of the first media data. A target playback position of the loading time on the playback track can be determined according to the loading time of a non-essential rendering resource.

If the next playback position of the first media data is the same as the target playback position of the non-essential rendering resource, which indicates that the next playback position requires loading the corresponding non-essential rendering resource, the non-essential rendering resource is determined as a target resource required for the next playback position.

In this implementation, by determining the loading time corresponding to a non-essential rendering resource, the target playback position of a non-essential rendering resource based on the first media data can be determined. By considering target playback positions in combination with the next playback position of the first media data, required target resources can be determined, thereby implementing dynamic scheduling of the non-essential rendering resources, and facilitating dynamic obtaining of the corresponding target resources according to an actual playback state.

Step b3: the target resources are processed according to preset priorities to generate the second media data corresponding to the target resources.

The preset priorities are preset download orders respectively for each target resource, and the second media data is media data generated based on rendering of the target resources. Specifically, each target resource is downloaded according to the preset priorities. One target resource can be rendered immediately after being downloaded, that is, performing downloading and rendering on-the-fly operations for the target resource, so that second media data associated with each target resource can be sequentially obtained.

In some optional implementations, the aforementioned step b3 may include the following steps.

Step b31: a plurality of download tasks are constructed corresponding to the target resources.

Step b32: priority sorting is performed on the plurality of download tasks based on the preset priorities to obtain a priority sorting result.

Step b33: the plurality of download tasks are triggered sequentially according to the priority sorting result to generate the second media data.

A plurality of download tasks corresponding to the target resources are constructed, each download task is added to a task queue, and priority sorting is performed on each download task in the task queue according to the preset priorities to obtain the priority sorting result. During downloading, the download tasks are triggered in combination with the priority sorting result. Specifically, different types of target resources correspond to different priorities. Target resources of various types are ranked in descending order of priorities, that is, the higher the priority of the target resource, the higher the triggering priority of the corresponding download task.

For example, a priority corresponding to a video resource is 100, a priority corresponding to an audio resource is 99, a priority corresponding to a filter resource is 98, a priority corresponding to an effect resource is 97, and a priority corresponding to a sticker resource is 96. Different types of target resources correspond to one or more download tasks, and each download task is sorted according to priorities of various types of target resources to obtain a priority sorting result of the download task. In this example, if the priority of the video resource is the highest, the download task corresponding to the video resource is prioritized for triggering.

When a download task is completed, which indicates that a resource package corresponding to the download task has been downloaded locally, the downloaded resource package is rendered to obtain media data associated with the resource package.

In this implementation, sequential triggering is performed according to the priority sorting result of the download tasks, which ensures prioritized loading of the required target resources, and enhances the rendering effects of the media resources.

In some optional implementations, the aforementioned step b33 may include the following steps.

Step c1: whether a number of the plurality of download tasks exceeds a preset concurrent number is detected.

Step c2: one or more current download tasks are determined according to the preset concurrent number, in response to the number of the plurality of download tasks exceeding the preset concurrent number.

Step c3: the one or more current download tasks are triggered sequentially according to the priority sorting result to generate the second media data.

The preset concurrent number is a maximum task concurrent number preset in a service layer, such as 3, 4, and 5. The preset concurrent number is not limited here, and may be determined by those skilled in the art according to actual requirements.

The number of download tasks corresponding to the target resources is counted, and the number of the download tasks is compared with the preset concurrent number to determine whether the number of the download tasks corresponding to the target resources exceeds the preset concurrent number. In response to the number of the download tasks exceeding the preset concurrency amount, several download tasks with higher priorities are taken out from the plurality of download tasks according to the preset concurrent number and the priority sorting result. The several download tasks are executed to trigger corresponding resource download processes, and the downloaded resources are rendered to obtain corresponding media data.

Specifically, after one download task is completed, a download task with the highest priority is continued to be taken out from the task queue to meet a maximum task concurrent number, and the resources are continuously downloaded, so that the target resources can be progressively rendered.

It should be noted that, following a playback progress of the first media data, the non-essential rendering resources required for the next playback position is detected in real time according to the playback moment and the playback position of the first media data, so that the non-essential rendering resources involved in content to be played back soon are prioritized for downloading, and the download tasks corresponding to the non-essential rendering resources are re-sorted according to the priorities, and each download task is sequentially triggered according to a priority sorting result based on the re-sorting.

In this implementation, in the case that the number of the download tasks corresponding to the target resources exceeds the preset concurrent number, the plurality of download tasks corresponding to the target resources are scheduled according to the preset priorities and the preset concurrent number. After each download task is completed, the download task with the highest priority is taken out from the remaining download tasks, so that progressive rendering can be implemented for the target resources, which greatly reduces the loading time of the resources without affecting the user's preview of the media effects.

Step b4: the second media data is played back based on the first media data.

Based on playing back the first media data through the media editing interface, the second media data obtained by rendering the target resources is loaded to the current media editing interface. Therefore, based on playing back the first media data, the second media data corresponding to each of the target resources is sequentially and dynamically added to the first media data for playback, thereby implementing dynamic loading and playback of the second media data.

Taking the first media data being video data and the second media data being audio data and sticker data as an example, playback moments for an audio resource and a sticker resource are preset. For example, the audio data and the sticker data are added after the video data is played back for 2s. When it is detected that the video data has been played back to 1.9s, the audio resource and the sticker resource required for the next playback position (that is, a position corresponding to 2s) are determined from the non-essential rendering resources, and the priority of the audio resource is higher than the priority of the sticker resource. Here, the audio resource and sticker resource are used as target resources, and downloaded in an order of the audio resource preceding the sticker resource. After the audio resource is downloaded, the audio data is rendered and loaded to the video data for audio playback. As the same time, the downloaded sticker resource is dynamically rendered, so that sticker data can be dynamically added to the current video data, which makes the user feel that a sticker is dynamically added.

Certainly, if the audio data is added after the video data has been played back for 2s, and the sticker data is added after the video data has been played back for 4s, when it is detected that the video data has been played back to 1.9s, the audio resource required for the next playback position (that is, a position corresponding to 2s) is determined from the non-essential rendering resources for download, and the downloaded audio resource is rendered to be played back when playing back the video data. Similarly, when it is detected that the video data has been played back to 3.9s, the sticker resource required for the next playback position (that is, a position corresponding to 4s) is determined from the non-essential rendering resources for download, and the downloaded sticker resource is rendered to dynamically present the sticker data in the video image when playing back the video data and the audio data.

It may be understood that if there are factors such as a network delay, the playback time point after initial dynamic loading of the media rendering resources may be later than an actual playback time point set by the rendering template. For example, in the aforementioned example, a presentation time period of the sticker is 4s to 8s. When it is detected that the video data is played back to 3.9s, the sticker resource required for the next playback position (that is, the position corresponding to 4s) should be determined from the non-essential rendering resources for download and playback. However, due to network reasons, download of the sticker resource is not completed at 4s, then a sticker effect can be played back after the download of the sticker resource is completed at 4.2s, and display of the sticker is canceled at 8s.

According to the media resource rendering method provided by this embodiment, the target resources needing to be loaded for the next playback position are determined by detecting the current playback position, so that the required target resources can be dynamically determined from the non-essential rendering resources, and the media resources to be played back soon can be prioritized for load, with no need to sequentially download all the non-essential rendering resources, thereby reducing the loading time. In addition, the determined target resources are sequentially processed according to the preset priorities, implementing progressive rendering of the non-essential rendering resources, so that the target resources can be dynamically added to the first media data, achieving a dynamic loading effect, and enhancing the user experience of previewing the media effects.

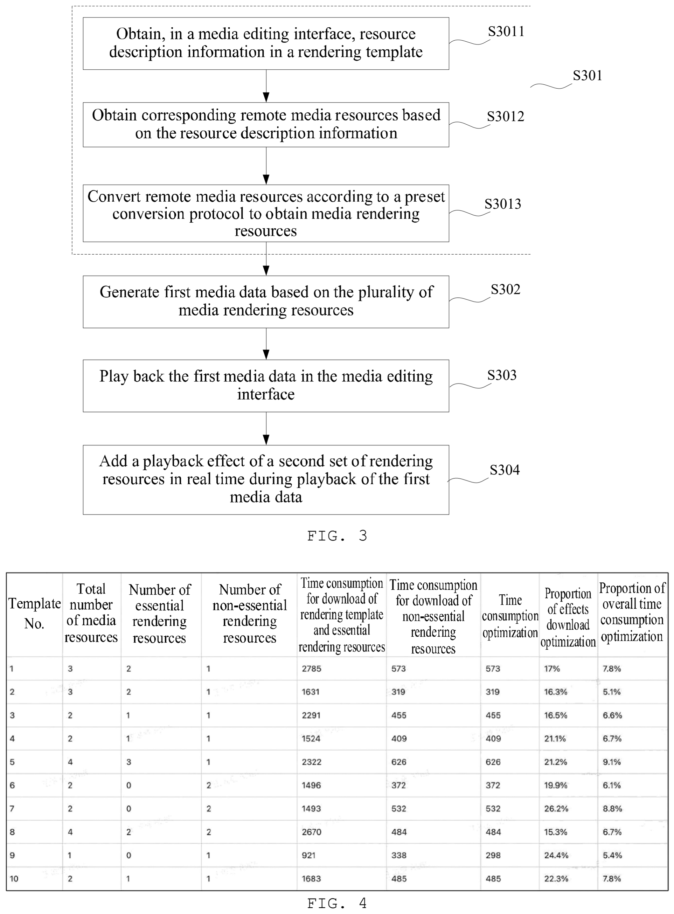

In this embodiment, there is provided a media resource rendering method that is usable in the aforementioned computer device, such as a mobile phone, a tablet computer, and a computer. FIG. 3 is a flowchart of a media resource rendering method according to an embodiment of the present disclosure. As shown in FIG. 3, the flow includes the following steps.

Step S301: a plurality of media rendering resources in a rendering template are obtained in a media editing interface.

Specifically, step S301 includes the following steps.

Step S3011: resource description information in the rendering template is obtained in the media editing interface.

The resource description information is a download path description for a remote resource package predefined by a technician in a rendering template protocol. All media rendering resources included in the rendering template have corresponding resource description information. Specifically, in response to the rendering template being obtained, the resource description information corresponding to all the media rendering resources can be obtained by parsing protocol information corresponding to the rendering template.

Step S3012: corresponding remote media resources are obtained based on the resource description information.

The remote media resources are media rendering resources stored in remote servers. Download paths of the remote media resources can be determined according to the resource description information, and the corresponding remote servers can be located based on the download paths, so that all the remote media resources can be obtained from the remote servers to which a download address is directed.

Step S3013: the remote media resources are converted according to a preset conversion protocol to obtain media rendering resources.

The preset conversion protocol is a data conversion protocol between the remote servers and the rendering template. Since the remote media resources may come from different servers and different remote servers have different definitions of data, in order to ensure data consistency, data of various remote media resources may be converted according to the preset conversion protocol, to obtain the media rendering resources that can be identified by the rendering template, and the media rendering resources are filled into the rendering template for subsequent rendering.

Step S302: first media data is generated based on the plurality of media rendering resources. The first media data includes a first set of rendering resources, and the first set of rendering resources includes at least a part of the media rendering resources. For detailed descriptions, refer to relevant descriptions corresponding to the aforementioned embodiment, which are not repeated here.

Step S303: the first media data is played back in the media editing interface. For detailed descriptions, refer to relevant descriptions corresponding to the aforementioned embodiment, which are not repeated here.

Step S304: a playback effect of a second set of rendering resources is added in real time during playback of the first media data. The second set of rendering resources includes other media rendering resources of the plurality of media rendering resources than the first set of rendering resources. For detailed descriptions, refer to relevant descriptions corresponding to the aforementioned embodiment, which are not repeated here.

According to the rendering method for the media rendering resources provided by this embodiment, protocol conversion is performed on the obtained remote media resources to generate the media rendering resources that are supported by the current rendering template, thereby improving compatibility with various remote resources.

As a specific application embodiment among the embodiments of the present disclosure, when the media effects are re-rendered according to the rendering template, an implementation manner is as follows.
1) An essential resource in a prepared rendering template (that is, an NLEModel) is downloaded in advance, and the essential resource is related to audio and video rendering, such as a first main track video clip that needs to be played back. Here, the essential resource in the rendering template is identified in combination with a preset rule.
2) After the essential resource is downloaded, the NLEModel is directly submitted to a rendering layer (that is, an NLEMedia layer) for rendering the essential resource. The NLEMedia layer may render the main track video according to the existing essential resource, and in this way, a video image is presented to the user.
3) There are still many non-essential rendering resources in the NLEModel template, and if all the non-essential rendering resources are downloaded one by one at a time, which may cause slow resource loading. In this case, it is favorable to download the non-essential rendering resources, such as other video resources, audio resources, sticker/filter resources, and various style resources, sequentially according to the preset priorities , and the preset priorities can support service configuration.
   Specifically, when the video image is played back, priority sorting on the non-essential rendering resources is performed according to the current playback position of the video, and a non-essential rendering resource involved in the content to be played back soon is prioritized for download. On this basis, various types of non-essential rendering resources are then selected according to the priorities. For instance, if a video resource has the highest priority, the video resource is most prioritized for download.
4) The downloaded non-essential rendering resources are rendered through the NLEMedia layer to add effects corresponding to the non-essential rendering resources to an audio-video rendering engine for playback.

Several experiment groups are set for this solution, resulting in experimental results shown in FIG. 4. By analyzing the experimental results, it can be observed that: Average time consumption per rendering template is optimized for 455ms, a download duration for the effects is optimized for 20.2%, and the overall application duration for the rendering template is optimized for 7.1%. It can be learned that this solution increases the loading speed of the rendering template and improves the user experience.

This embodiment further provides a media resource rendering apparatus. The apparatus is used to implement the aforementioned embodiments and preferred implementations, and what have already been described are not described herein again. As used below, the term "module" may be a combination of software and/or hardware that implements a predetermined function. Although the apparatus described in the following embodiment is preferably implemented in software, it is also possible and contemplated that the apparatus is implemented in hardware or a combination of software and hardware.

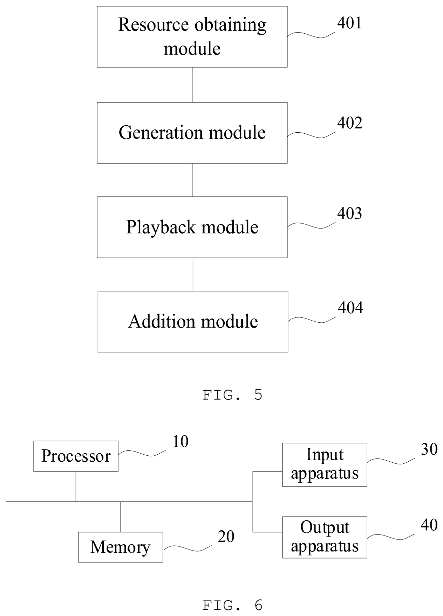

This embodiment provides a rendering apparatus for media rendering resources, as shown in FIG. 5. The rendering apparatus includes:
a resource obtaining module 401 configured to obtain, in a media editing interface, a plurality of media rendering resources in a rendering template; and
a generation module 402 configured to generate first media data based on the plurality of media rendering resources, where the first media data includes a first set of rendering resources, and
the first set of rendering resources includes at least a part of the media rendering resources;
a playback module 403 configured to play back the first media data in the media editing interface; and
an addition module 404 configured to add a playback effect of a second set of rendering resources in real time during playback of the first media data, where the second set of rendering resources includes other media rendering resources of the plurality of media rendering resources than the first set of rendering resources.

In some optional implementations, the aforementioned generation module 402 may include:
an identification unit configured to identify at least one essential rendering resource from the plurality of media rendering resources; and
a resource processing unit configured to process the essential rendering resource to generate the first media data, where the first media data includes the essential rendering resource.

In some optional implementations, the aforementioned identification unit may include:
an identifier identification unit configured to identity whether each of the media rendering resources carries an essential identifier; and
an essentiality determining unit configured to determine one or more media rendering resources carrying the essential identifier as the essential rendering resource.

In some optional implementations, the aforementioned addition module 404 may include:
a data generation unit configured to generate second media data based on the first media data and the second set of rendering resources, where the second media data includes the first media data and at least a part of media rendering resources of the second set of rendering resources added in real time.

In some implementations, the second set of rendering resources includes a non-essential rendering resource of the plurality of media rendering resources, and the aforementioned data generation unit may include:
a rendering subunit configured to process, within a preset duration after processing the essential rendering resource, one or more non-essential rendering resources to obtain a processing result, and generate and play back the second media data including the non-essential rendering resources based on the first media data and the processing result.

In some implementations, the aforementioned rendering subunit is specifically further configured to: determine a playback position of the first media data corresponding to a time wehn the first media data has been played back for a preset duration; determine target resources required for a next playback position from the non-essential rendering resources based on the playback position; process the target resources according to preset priorities to generate the second media data corresponding to the target resources; and play back the second media data based on the first media data.

In some optional implementations, the aforementioned rendering subunit is specifically further configured to: obtain a loading time corresponding to each non-essential rendering resource, and determine, based on the loading time, a target playback position of the non-essential rendering resource based on the first media data; and compare the target playback position with the next playback position, and filter for the target resources required for the next playback position from the non-essential rendering resources based on the comparison.

In some optional implementations, the aforementioned rendering subunit is specifically further configured to: construct a plurality of download tasks corresponding to the target resources; perform priority sorting on the plurality of download tasks based on preset priorities to obtain a priority sorting result; and trigger the download tasks sequentially according to the priority sorting result to generate the second media data.

In some optional implementations, the aforementioned rendering subunit is specifically further configured to: detect whether a number of the download tasks exceeds a preset concurrent number; determine one or more current download tasks according to the preset concurrent number, in response to determining that the number of the download tasks exceeds the preset concurrent number; and trigger the one or more current download tasks sequentially according to the priority sorting result to obtain second media data corresponding to each download task.

In some optional implementations, the aforementioned resource obtaining module 401 may include:
an information obtaining unit configured to obtain, in the media editing interface, resource description information in the rendering template;
a remote resource obtaining unit configured to obtain corresponding remote media resources based on the resource description information; and
a resource conversion unit configured to convert the remote media resources according to a preset conversion protocol to obtain the media rendering resources.

Further functional descriptions of the aforementioned modules and the aforementioned units are the same as those in the aforementioned corresponding embodiments. Details are not described herein again.

The media resource rendering apparatus in this embodiment is presented in a form of a functional unit, and the unit here is an ASIC circuit, a processor and a memory that execute one or more software programs or fixed programs, and/or another device that can provide the aforementioned functions.

According to the media resource rendering apparatus provided by this embodiment, the first media data is generated and played back based on a part of the plurality of media rendering resources obtained in the media editing interface, and the other media rendering resources are processed based on playing back the first media data, so as to add playback effects corresponding to the other media rendering resources in real time to the first media data. Therefore, there is no need to wait for completion of downloads of all the media resources in the rendering template before rendering, but the media resources in the rendering template may be downloaded and rendered at any time, thereby reducing the loading time thereof. Moreover, during rendering, a part of the media rendering resources can be prioritized for processing to present corresponding media data to the user, reducing waiting time of the user, and the other media rendering resources can be played back and rendered, so that the corresponding playback effects can be dynamically added based on playing back the first media data, reducing impact on the presentation of the media effects, and improving the user experience of previewing the media effects.

An embodiment of the present disclosure further provides a computer device having the media resource rendering apparatus as shown in FIG. 5 described above.

Referring to FIG. 6, FIG. 6 is a schematic diagram of a structure of a computer device according to an optional embodiment of the present disclosure. As shown in FIG. 6, the computer device includes: one or more processors 10, a memory 20, and interfaces for connecting components, including a high-speed interface and a low-speed interface. The components are communicatively connected to each other via different buses, and can be mounted on a common motherboard or otherwise as desired. The processor may process instructions executed in the computer device, including instructions stored in or on the memory to display graphical information of a graphical user interface (GUI) on an external input/output apparatus (such as a display device coupled to the interface). In some optional implementations, if required, a plurality of processors and/or a plurality of buses may be used together with a plurality of memories and a plurality of memories. Likewise, a plurality of computer devices may be connected, each providing some of necessary operations (for example, as a server array, a set of blade servers, or a multi-processor system). One processor 10 is used as an example in FIG. 6.

The processor 10 may be a central processor, a network processor, or a combination thereof. The processor 10 may further include a hardware chip. The hardware chip may be an application-specific integrated circuit, a programmable logic device, or a combination thereof. The programmable logic device may be a complex programmable logic device, a field-programmable gate array, a generic array logic, or any combination thereof.

The memory 20 stores instructions executable by at least one processor 10 to cause the at least one processor 10 to perform the methods shown in the aforementioned embodiments.

The memory 20 may include a program storage area and a data storage area. The program storage area may store an operating system, and an application required by at least one function. The data storage area may store data created based on use of the computer device, etc. In addition, the memory 20 may include a high-speed random access memory, and may further include a non-transitory memory, such as at least one magnetic disk storage device, a flash memory device, or other non-transitory solid-state storage devices. In some optional implementations, the memory 20 optionally includes memories remotely disposed relative to the processor 10. The remote memories may be connected to the computer device through a network. Instances of the network include, but are not limited to, the Internet, intranets, local area networks, mobile communication networks, and combinations thereof.

The memory 20 may include a volatile memory, such as a random access memory. The memory may also include a non-volatile memory, such as a flash memory, a hard disk drive, or a solid-state hard disk. The memory 20 may also include a combination of the aforementioned types of memories.

The computer device further includes an input apparatus 30 and an output apparatus 40. The processor 10, the memory 20, the input apparatus 30, and the output apparatus 40 may be connected through a bus or in another manner, for example, are connected through the bus in FIG. 6.

The input apparatus 30 may receive entered numeric or character information and generate a key signal input related to a user setting and function control of the computer device, such as a touch screen, a keypad, a mouse, a trackpad, a touchpad, a pointing stick, one or more mouse buttons, a trackball, or a joystick. The output apparatus 40 may include a display device, an auxiliary lighting apparatus (e.g., an LED), a tactile feedback apparatus (e.g., a vibration motor), and the like. The display device includes, but is not limited to, a liquid crystal display, a light-emitting diode, a display, and a plasma display. In some optional implementations, the display device may be a touch screen.

The computer device further includes a communication interface configured to perform data communication between the computer device and another device or communication network.

An embodiment of the present disclosure further provides a computer-readable storage medium. The aforementioned method according to an embodiment of the present disclosure may be implemented in hardware or firmware, or implemented as computer code that may be recorded on a storage medium, or implemented as computer code that is originally stored on a remote storage medium or a non-transitory machine-readable storage medium downloaded over a network and that is to be stored on a local storage medium, so that the method described herein may be processed by such software stored on a storage medium using a general-purpose computer, a special-purpose processor, or programmable or special-purpose hardware. The storage medium may be a magnetic disk, an optical disc, a read-only storage memory, a random storage memory, a flash memory, a hard disk drive or a solid-state drive, etc. Further, the storage medium may also include a combination of the aforementioned types of memories. It can be understood that a computer, a processor, a microprocessor controller, or programmable hardware includes a storage component that can store or receive software or computer code. When the software or computer code is accessed and executed by the computer, the processor, or the hardware, the methods shown in the aforementioned embodiments are implemented.

An embodiment of the present disclosure further provides a computer program. The computer program includes computer instructions which, when executed by the aforementioned processor (such as processor 10), cause the method shown in the aforementioned embodiments to be implemented.

Although the embodiments of the present disclosure are described with reference to the accompanying drawings, those skilled in the art would provide various modifications and variations without departing from the spirit and scope of the present disclosure, and such modifications and variations shall all fall within the scope defined by the appended claims.

## Claims

1. A media resource rendering method, comprising:
obtaining, in a media editing interface, a plurality of media rendering resources in a rendering template;
generating first media data based on the plurality of media rendering resources, wherein the first media data comprises a first set of rendering resources, the first set of rendering resources comprising at least a part of the media rendering resources;
playing back the first media data in the media editing interface; and
adding a playback effect of a second set of rendering resources in real time during playback of the first media data, the second set of rendering resources comprising other media rendering resources of the plurality of media rendering resources than the first set of rendering resources.

2. The method according to claim 1, wherein the first set of rendering resources comprises an essential rendering resource of the plurality of media rendering resources, and the generating the first media data based on the plurality of media rendering resources comprises:
identifying at least one essential rendering resource from the plurality of media rendering resources; and
processing the at least one essential rendering resource to generate the first media data, the first media data comprising the at least one essential rendering resource.

3. The method according to claim 2, wherein the identifying the at least one essential rendering resource from the plurality of media rendering resources comprises:
identifying whether each media rendering resource of the plurality of media rendering resources carries an essential identifier; and
determining one or more media rendering resources that carry the essential identifier as the essential rendering resource.

4. The method according to any one of claims 1 to 3, wherein the adding the playback effect of the second set of rendering resources in real time during the playback of the first media data comprises:
generating second media data based on the first media data and the second set of rendering resources, the second media data comprising the first media data and at least a part of media rendering resources in the second set of rendering resources added in real time.

5. The method according to claim 4, wherein the second set of rendering resources comprises non-essential rendering resources of the plurality of media rendering resources, and the generating the second media data based on the first media data and the second set of rendering resources comprises:
processing, within a preset duration after processing the essential rendering resource, one or more of the non-essential rendering resources to obtain a processing result, and generating and playing back the second media data comprising the non-essential rendering resources based on the processing result and the first media data.

6. The method according to claim 5, wherein the processing, within the preset duration after processing the essential rendering resource, the one or more of the non-essential rendering resources to obtain the processing result, and the generating and playing back the second media data comprising the non-essential rendering resources based on the processing result and the first media data comprises:
determining a playback position of the first media data corresponding to a time when the first media data has been played back for a preset duration;
determining target resources required for a next playback position from the non-essential rendering resources based on the playback position;
processing the target resources according to preset priorities to generate the second media data corresponding to the target resources; and
playing back the second media data based on the first media data.

7. The method according to claim 6, wherein the determining the target resources required for the next playback position from the non-essential rendering resources based on the playback position comprises:
obtaining a loading time corresponding to each of the non-essential rendering resources, and determining, based on the loading time, a target playback position of the non-essential rendering resource based on the first media data; and
comparing the target playback position with the next playback position, and filtering for the target resources required for the next playback position from the non-essential rendering resources based on the comparison.

8. The method according to claim 6, wherein the processing the target resources according to preset priorities to generate the second media data corresponding to the target resources comprises:
constructing a plurality of download tasks corresponding to the target resources;
performing priority sorting on the plurality of download tasks based on the preset priorities to obtain a priority sorting result; and
triggering the plurality of download tasks sequentially according to the priority sorting result to generate the second media data.

9. The method according to claim 8, wherein the triggering the download tasks sequentially according to the priority sorting result to generate the second media data comprises:
detecting whether a number of the plurality of download tasks exceeds a preset concurrent number;
determining, in response to determining that the number of the plurality of download tasks exceeds the preset concurrent number, one or more current download tasks according to the preset concurrent number; and
triggering the one or more current download tasks sequentially according to the priority sorting result to obtain the second media data corresponding to the download tasks.

10. The method according to any one of claims 1 to 3, wherein the obtaining, in the media editing interface, the plurality of media rendering resources in the rendering template comprises:
obtaining, in the media editing interface, resource description information in the rendering template;
obtaining corresponding remote media resources based on the resource description information; and
converting the remote media resources according to a preset conversion protocol to obtain the media rendering resources.

11. A media resource rendering apparatus, comprising:
a resource obtaining module configured to obtain, in a media editing interface, a plurality of media rendering resources in a rendering template;
a generation module configured to generate first media data based on the plurality of media rendering resources, wherein the first media data comprises a first set of rendering resources, the first set of rendering resources comprising at least a part of the media rendering resources;
a playback module configured to play back the first media data in the media editing interface; and
an addition module configured to add a playback effect of a second set of rendering resources in real time during playback of the first media data, the second set of rendering resources comprising other media rendering resources of the plurality of media rendering resources than the first set of rendering resources.

12. A computer device, comprising:
a memory and a processor, the memory and the processor being communicatively connected to each other, wherein the memory stores computer instructions, and the processor executes the computer instructions to perform the media resource rendering method according to any one of claims 1 to 10.

13. A computer-readable storage medium, storing computer instructions that, when executed by a computer, cause the computer to perform the media resource rendering method according to any one of claims 1 to 10.

14. A computer program, comprising computer instructions that, when executed by a computer, cause the computer to perform the media resource rendering method according to any one of claims 1 to 10.
